# FASCICULE DE BREVET EUROPEEN

(11) **EP 3 445 949 B1**
(45) Date de publication et mention de la délivrance du brevet: **29.04.2020**
(21) Numéro de dépôt: 17722490.4
(22) Date de dépôt: 13.04.2017
(51) Int. Cl.: F01D 25/08, F01D 25/12, F01D 25/14, F01D 11/20, F01D 11/24, F01D 25/24

(54) **DISPOSITIF DE REFROIDISSEMENT PAR JETS D'AIR D'UN CARTER DE TURBINE**
VORRICHTUNG ZUR KÜHLUNG EINES TURBINENGEHÄUSES MIT LUFTSTRAHLEN
DEVICE FOR COOLING A TURBINE CASING WITH AIR JETS

(30) Priorité: 18.04.2016 FR 1653418
(43) Date de publication de la demande: 27.02.2019
(73) Titulaire: Safran Aircraft Engines, 75015 Paris (FR)
(72) Inventeur: BUNEL, Jacques, Marcel, Arthur, 77550 MOISSY-CRAMAYEL (FR); D'HERBIGNY, Emeric, 77550 MOISSY-CRAMAYEL (FR); TINCELIN, Pierre, 77550 MOISSY-CRAMAYEL (FR)
(74) Mandataire: Regimbeau
(86) Numéro de dépôt international: PCT/FR2017/050893
(87) Numéro de publication internationale: WO 2017/182740

(56) Documents cités:
- US-A- 4 019 320
- US-A- 5 100 291
- US-A- 5 540 547
- US-A- 6 149 074
- US-A1- 2014 109 596

## Description

### DOMAINE TECHNIQUE GENERAL

L'invention se situe dans le domaine du refroidissement d'un carter de turbine.

La présente invention concerne plus précisément un dispositif de refroidissement par jets d'air du carter d'une turbine, de préférence basse pression, d'une turbomachine selon la revendication 1.

L'invention concerne également une turbomachine, équipée d'un tel dispositif.

### ETAT DE L'ART

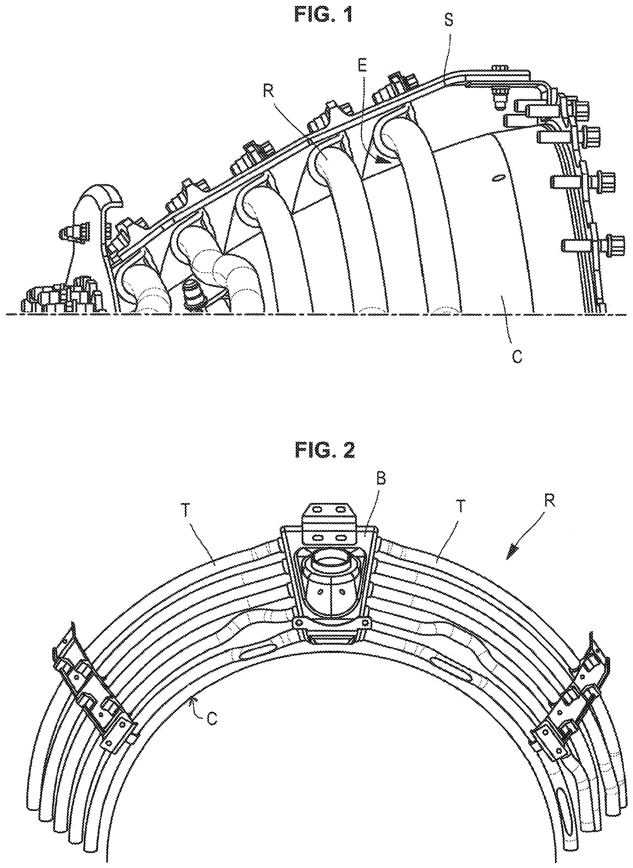

Comme on peut le voir sur les figures 1 et 2 jointes, qui représentent l'état de la technique, la turbine basse pression d'une turbomachine est protégée par un carter C de forme générale évasée, sensiblement tronconique. Ce carter est refroidi en utilisant la technologie du refroidissement par impact.

Le carter C est équipé d'un ou plusieurs boitier(s) B d'alimentation en air sous pression, chacun d'entre eux étant raccordé à plusieurs rampes de refroidissement R.

Dans l'exemple de réalisation représenté sur ces figures, le carter C est équipé de deux boitiers B, positionnés à environ 180° l'un de l'autre, (un seul étant visible sur la figure 2). En outre, chaque boitier B est équipé de cinq rampes R, avec deux tubes T par rampe, chaque tube s'étendant sur environ 90°.

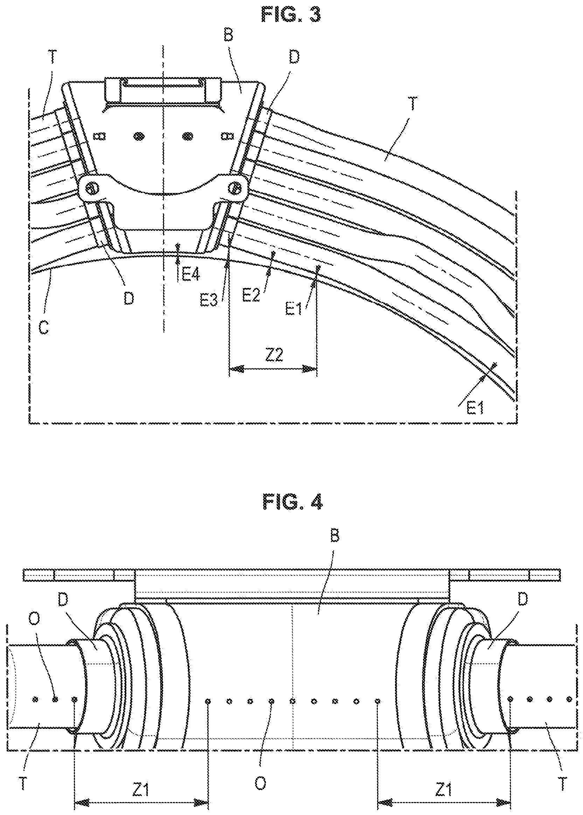

Comme représenté sur la vue de dessous du boitier B de la figure 4 jointe, les tubes T ainsi que le boitier B sont percés d'une série de petits orifices O débouchant au droit de la surface extérieure du carter. L'air sous pression transitant au travers de ces orifices O assure ainsi une ventilation par impact du carter C.

Par ailleurs, et comme on peut le voir sur la figure 3 jointe et sur la figure 4, chaque tube T est raccordé au boitier B par l'intermédiaire d'une douille cylindrique D. Chaque tube T est brasé dans la douille D et chaque douille D est brasée dans le boîtier B.

Or, comme on peut le voir sur la figure 4, le boitier B ne présente pas d'orifices O à ses deux extrémités et les douilles D non plus. De chaque côté du boitier B, il existe donc une zone Z1, entre le dernier orifice O du boitier B et le premier orifice O du tube T, dans laquelle il n'y a pas d'orifices, donc pas d'injection d'air et donc pas de refroidissement de la peau du carter située en regard.

De plus, les tubes T ont sur la plus grande partie de leur longueur une forme incurvée (cintrée) qui épouse sensiblement la courbure du carter C. Toutefois, afin d'assurer un brasage correct du tube T dans la douille D, l'extrémité du tube est rectiligne sur une zone Z2, (voir figure 3).

En conséquence, l'entrefer entre le tube T de la rampe R et la peau (surface extérieure) du carter C n'est pas constant sur toute la circonférence du carter et surtout la rampe s'éloigne de la peau du carter, ce qui a un impact négatif sur le refroidissement. On constate ainsi que l'entrefer E1 souhaité entre le tube et le carter peut prendre des valeurs de plus en plus élevées E2, voire E3, plus on se rapproche de la douille D. A titre d'exemple, pour un entrefer E1 de 3,5 mm, les valeurs de E2 et E3 peuvent atteindre respectivement 4.8 mm et 8,5 mm.

La variation de l'entrefer se retrouve également entre le fond du boitier B qui est plus proche de la peau du carter C (entrefer E4) et l'extrémité du tube T à l'endroit où il est brasé dans la douille D (entrefer E3).

Or, pour qu'un refroidissement par impact de jets d'air soit efficace, il faut que cet entrefer soit non seulement constant mais également d'une faible valeur, déterminée par le cahier des charges du carter, (généralement de l'ordre de 2 mm à 3,5 mm).

Pour résumer, on observe donc à proximité de chaque boitier B, une absence de refroidissement du carter C sur deux zones Z1 d'une longueur de l'ordre de 25 mm, soit 50 mm et un mauvais refroidissement sur deux zones Z2 d'une longueur de l'ordre de 60 mm, soit 120 mm.

Ces zones pas ou peu refroidies sont à multiplier par le nombre de boitiers B disposés autour du carter C, nombre qui dans certains modes de réalisation peut être de quatre.

Enfin, les opérations de montage et de maintenance des rampes de refroidissement R sur le carter C peuvent potentiellement solliciter fortement les brasures entre les douilles D et le boitier B ou entre les douilles D et les rampes R. Il existe donc un risque d'endommagement prématuré desdites rampes.

On connaît également d'après le document US 2014/109596, un dispositif de refroidissement par jets d'air du carter d'une turbine, qui comprend un boîtier d'alimentation en air et au moins une rampe de refroidissement comprenant deux tubes disposés de part et d'autre du boîtier.

Toutefois, les parois latérales de ce boîtier ne se prolongent pas par des manchons tubulaires monobloc avec lesdites parois latérales et disposés de façon que leurs fonds soient au même niveau que le fond du boîtier. Il s'en suit que l'entrefer entre la paroi extérieure du carter et le fond du boîtier d'une part et l'entrefer entre la paroi extérieure du carter et les tubes de refroidissement ne sont pas identiques, ce qui ne garantit pas un refroidissement optimal.

### PRESENTATION DE L'INVENTION

L'invention a donc pour objectif de résoudre les inconvénients précités de l'état de la technique.

L'invention a donc notamment pour objectif de fournir un dispositif de refroidissement par jets d'air du carter d'une turbine qui assure un refroidissement uniforme du carter, c'est-à-dire qui assure un entrefer le plus constant possible entre la rampe de refroidissement et la surface extérieure du carter.

Un autre objectif de l'invention est de proposer un dispositif qui permette de refroidir une partie de la surface extérieure (peau) dudit carter plus importante que celle que l'on peut refroidir avec les dispositifs de l'état de la technique et ainsi d'augmenter la durée de vie du carter.

Enfin, un autre objectif encore de l'invention est de simplifier le procédé de fabrication des rampes de refroidissement et d'obtenir un dispositif de refroidissement de plus grande résistance mécanique.

A cet effet, l'invention concerne un dispositif de refroidissement par jets d'air du carter d'une turbine, de préférence basse pression, d'une turbomachine, comprenant un boitier d'alimentation en air sous pression et au moins une rampe de refroidissement comprenant deux tubes de refroidissement disposés de part et d'autre dudit boitier, ledit boitier comprenant un fond, deux parois latérales longitudinales, deux parois d'extrémité amont et aval et une paroi supérieure, et ledit fond du boitier étant percé d'orifices d'injection d'air disposés de façon à déboucher vers le carter autour duquel ledit dispositif de refroidissement est destiné à être disposé, chaque tube de refroidissement étant incurvé, disposé autour d'une partie du carter et à distance de celui-ci et étant muni d'orifices d'injection d'air débouchant vers le carter.

Conformément à l'invention, chacune desdites parois latérales se prolonge vers l'extérieur par au moins un manchon tubulaire monobloc avec ladite paroi latérale, chaque manchon est disposé sur ladite paroi latérale de façon que son fond soit au même niveau que ledit fond du boitier à l'endroit de leur jonction et chaque manchon est configuré et dimensionné pour que l'un des tubes de refroidissement puisse y être raccordé.

Grâce à ces caractéristiques de l'invention, l'entrefer entre le carter et le fond du boîtier et entre le carter et les tubes de la rampe de refroidissement est quasiment constant, ce qui garantit un meilleur refroidissement. En outre, le fait que le boîtier soit monobloc avec les manchons renforce structurellement l'ensemble.

Selon d'autres caractéristiques avantageuses et non limitatives de l'invention, prises seules ou en combinaison :
- le fond du manchon est percé, sur au moins une partie de sa longueur, d'orifices d'injection d'air disposés de façon à déboucher vers le carter autour duquel ledit dispositif est destiné à être disposé ;
- les orifices d'injection d'air ménagés dans le fond du boîtier sont alignés avec les orifices d'injection d'air ménagés dans les manchons et avec les orifices d'injection d'air ménagés dans les tubes de refroidissement ;
- le fond du boitier et les manchons sont incurvés de part et d'autre d'un axe longitudinal médian du boitier, de façon à épouser la forme du contour du carter autour duquel ledit dispositif de refroidissement est destiné à être disposé et de façon qu'il existe un entrefer constant ou sensiblement constant entre la surface extérieure dudit carter d'une part et le fond du boîtier et les fonds des manchons d'autre part ;
- chaque manchon présente une zone de jonction avec la paroi latérale du boitier et cette zone de jonction est évasée du manchon vers la paroi latérale du boitier et sur la portion de sa circonférence autre que celle du fond du manchon ;
- ladite paroi supérieure du boitier est constituée d'un couvercle rapporté et fixé aux parois latérales et d'extrémité dudit boitier ;
- le couvercle est fixé aux parois latérales et d'extrémité dudit boitier par soudure ou brasage ;
- les tubes des rampes de refroidissement sont introduits dans l'extrémité libre des manchons et raccordés à celle-ci par brasage.

L'invention concerne également une turbomachine comprenant une turbine, notamment une turbine basse pression, entourée d'un carter, qui comprend un dispositif de refroidissement par jets d'air dudit carter, tel que précité.

### PRESENTATION DES FIGURES

D'autres caractéristiques et avantages de l'invention apparaîtront de la description qui va maintenant en être faite, en référence aux dessins annexés, qui en représentent, à titre indicatif mais non limitatif, un mode de réalisation possible.

Sur ces dessins :
- la figure 1 est une vue en perspective d'une partie d'un carter d'une turbine d'une turbomachine, équipé de rampes de refroidissement selon l'état de la technique,
- la figure 2 est une vue en perspective d'un boitier d'alimentation en air et des rampes de refroidissement selon l'état de la technique,
- la figure 3 est une vue en élévation d'un boitier d'alimentation en air et d'une partie des rampes de refroidissement selon l'état de la technique,
- la figure 4 est une vue en perspective du dessous d'un boitier d'alimentation en air et d'une partie des rampes de refroidissement selon l'état de la technique,
- la figure 5 est une vue en perspective et en élévation d'une partie des rampes de refroidissement et d'un boitier d'alimentation en air conforme à l'invention,
- la figure 6 est une vue de détail de la zone de l'intérieur du boitier repérée A sur la figure 5,
- la figure 7 est une vue similaire à la figure 5, mais sur laquelle le couvercle du boitier d'alimentation est représenté,
- la figure 8 est une vue en perspective et de dessous d'une partie des rampes de refroidissement et d'un boitier d'alimentation en air conforme à l'invention, et
- la figure 9 est une vue de détail de la figure 8.

### DESCRIPTION DETAILLEE

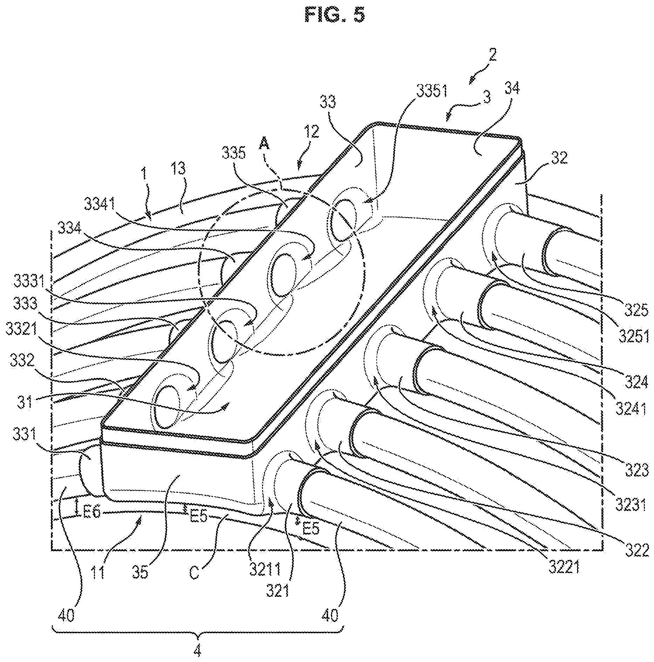

Comme on peut le voir sur la figure 5, le dispositif de refroidissement 2 conforme à l'invention permet de refroidir le carter 1 d'une turbine. Ce carter 1 a une forme évasée, comprenant généralement plusieurs portions tronconiques successives. Il présente une extrémité amont 11 et une extrémité aval 12, par rapport au sens de circulation des gaz dans la turbine. Sa surface extérieure (peau) est référencée 13.

Le dispositif de refroidissement 2 comprend un boîtier 3 d'alimentation en air sous pression et au moins une rampe de refroidissement 4.

Chaque rampe 4 comprend deux tubes 40.

De préférence, le dispositif de refroidissement 2 comprend plusieurs rampes 4, par exemple au nombre de cinq sur les figures 5, 7 et 8, réparties autour du carter 1 entre l'amont et l'aval de celui-ci.

Comme décrit précédemment avec le dispositif de l'état de la technique, le carter 1 peut être équipé de deux dispositifs de refroidissement 2, avec par exemple deux boîtiers 3, positionnés à environ 180° l'un de l'autre et dont les tubes 40 des rampes de refroidissement s'étendent de chaque côté de ce boîtier, sur environ 90°. Le carter 1 peut également être équipé de quatre boîtiers de refroidissement 3, les tubes 40 des rampes de refroidissement s'étendant alors sur une surface angulaire moindre.

Le boîtier 3 est relié à une source d'alimentation en air sous pression, non représentée sur les figures.

Comme représenté sur la figure 5, ce boîtier 3 est disposé à l'extérieur de la surface extérieure 13 du carter 1 et à distance de celle-ci. Ce boîtier 3 ainsi que les rampes 4 sont fixés au carter 1 par exemple à l'aide de brides non représentées sur les figures. D'autres modes de fixation du boitier sont envisageables.

Le boitier 3 comprend un fond 31, deux parois latérales longitudinales 32, 33, disposées de part et d'autre du fond 31 et deux parois d'extrémité amont 35 et aval 34.

Chacune desdites parois amont 35 et aval 34 joint respectivement le fond 31 avec les extrémités amont, respectivement aval des deux parois latérales longitudinales 32, 33. Enfin, le boitier 3 est obturé par une paroi supérieure 36, non visible sur la figure 5.

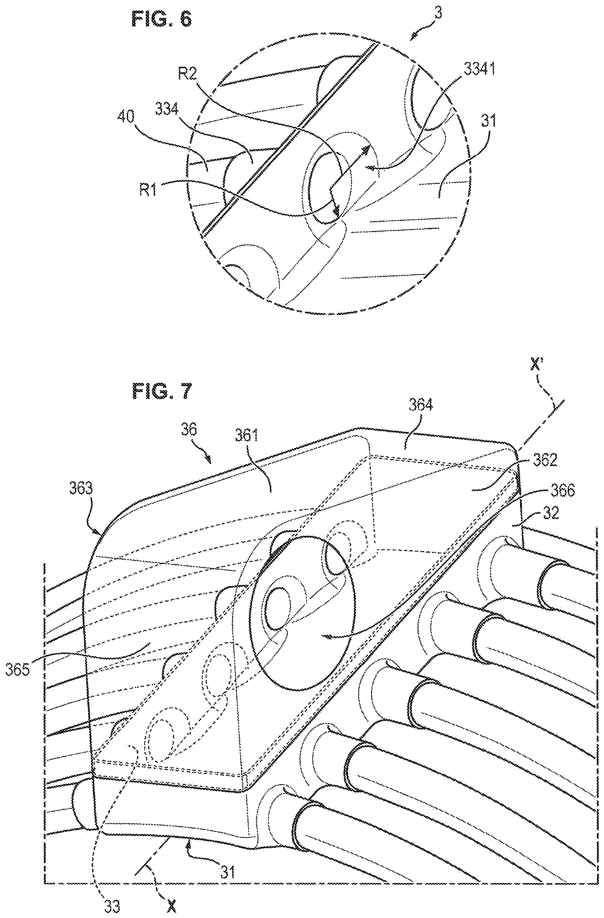

Dans l'exemple de réalisation représenté sur la figure 7, cette paroi supérieure 36 se présente sous la forme d'un couvercle rapporté, fixé aux parois latérales 32,33 et aux parois amont 35 et aval 34, de préférence par soudure ou par brasage.

Toutefois, selon un autre mode de réalisation non représenté sur les figures, la paroi supérieure 36 pourrait être venue de matière et donc être d'une seule pièce avec les autres parois 32, 33, 34 et 35.Dans ce cas, le boîtier 3 peut, de façon avantageuse, être obtenu par un procédé de fonderie ou par fabrication directe (par exemple fabrication additive).

Le fond 31 est conçu pour être disposé à faible distance du carter 1, qui est de forme évasée, et ce, avec un entrefer le plus constant possible. De ce fait le fond 31 est incliné de l'amont vers l'aval pour épouser la forme tronconique ou sensiblement tronconique du carter 1.

Le fond 31 du boitier 3 présente un axe longitudinal médian X-X' (représenté uniquement sur la figure 7).

Dans le mode de réalisation représenté sur les figures et tel que cela apparait mieux sur les figures 5 et 7, les parois d'extrémité amont 35 et aval 34 sont parallèles entre elles ou approximativement parallèles entre elles. Du fait de l'inclinaison du fond 31, la paroi amont 35 forme un angle aigu avec celui-ci et la paroi aval 34, un angle obtus.

Comme on peut le voir sur la figure 7, le couvercle 36 comprend une paroi supérieure 361, deux parois latérales longitudinales 362, 363, de forme triangulaire et disposées de part et d'autre de la paroi supérieure 361, et deux parois d'extrémité amont 365, respectivement aval 364 joignant les deux parois 362, 363.

Un orifice 366 est percé dans l'une des parois latérales, par exemple la paroi 362. Il permet de raccorder le boitier 3 à la source d'alimentation en air sous pression.

D'autres formes de couvercles sont envisageables sans pour autant sortir du cadre de l'invention. Le raccord à la source d'alimentation en air sous pression pourrait être prévu sur n'importe quelle face du boitier 3 sauf le fond 31.

Conformément à l'invention, chacune desdites parois latérales 32, 33 du boitier 3 se prolonge vers l'extérieur, par au moins un manchon tubulaire venu de matière (monobloc) avec ladite paroi latérale.

Il y a autant de manchons que de rampes 4.

Dans l'exemple représenté sur les figures où il y a cinq rampes 4, il y a donc sur chaque paroi latérale 32, respectivement 33, cinq manchons référencés de l'amont vers l'aval, 321, 322, 323, 324 et 325 pour ceux ménagés sur la paroi 32 et respectivement 331, 332, 333, 334 et 335 pour ceux ménagés sur la paroi 33.

Les manchons sont donc monoblocs avec le boitier 3. Ceci permet de supprimer le brasage qui existait entre les douilles et le boîtier dans les dispositifs de refroidissement de l'état de la technique. Ainsi, le boîtier 3 de l'invention assure un renforcement structurel de l'ensemble de la rampe puisque les brasages entre le boîtier et les douilles qui constituaient des points de fragilisation ont été supprimés.

Le boitier 3 muni des manchons 321 à 325 et 331 à 335 est avantageusement obtenu par fonderie ou par un procédé de fabrication additive, tel que la fusion laser, car ces procédés de fabrication sont bien adaptés aux pièces de géométrie complexe.

Les tubes 40 sont emmanchés dans chacun desdits manchons 321 à 325 et 331 à 335 et fixés à ces derniers de préférence par brasage. Les diamètres de sortie desdits manchons sont adaptés en conséquence.

De plus, chaque manchon est disposé sur la paroi latérale 32, 33, de façon qu'une portion de sa circonférence, dite "fond du manchon" (autrement dit sa partie inférieure destinée à être placée en regard de la surface extérieure 13 du carter 1 lorsque le dispositif de refroidissement est en place), soit au même niveau que le fond 31 du boitier, à l'endroit de leur jonction.

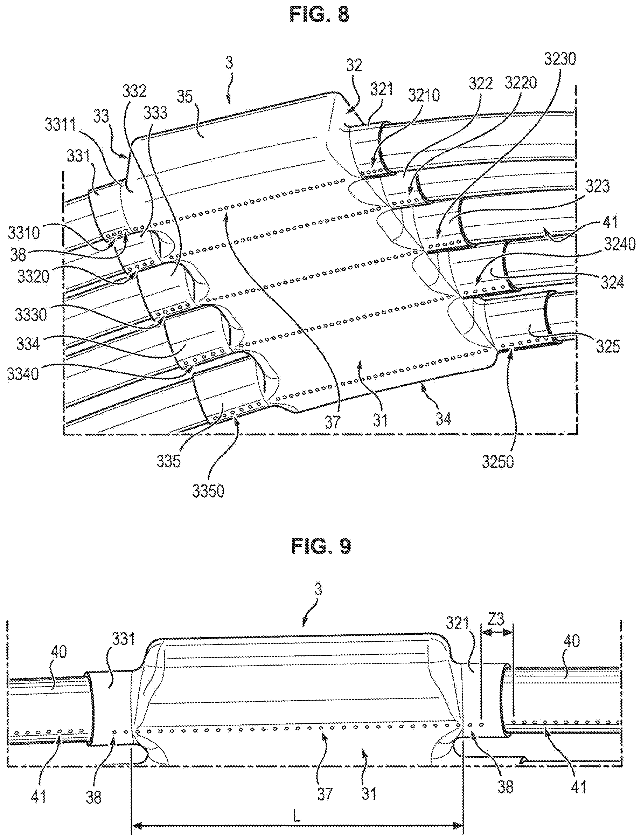

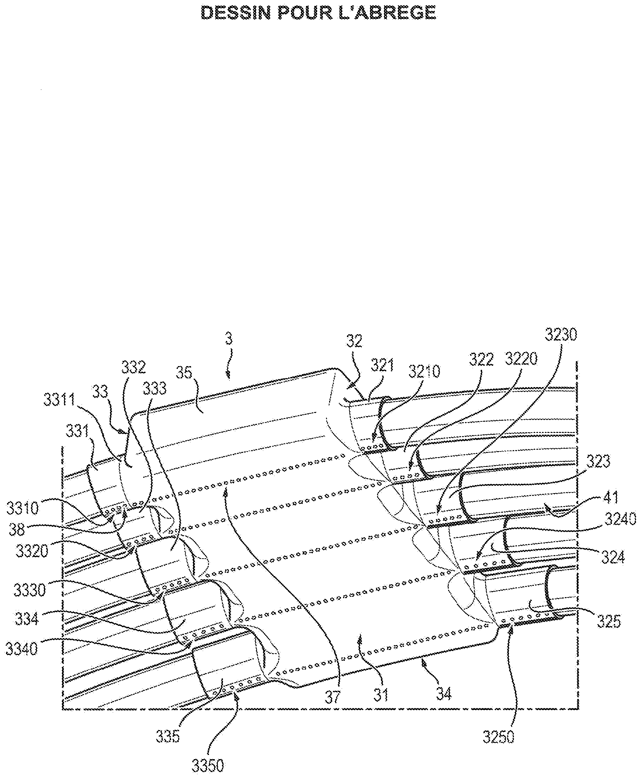

Les fonds du manchon sont visibles sur la vue de dessous de la figure 8. Ils sont référencés respectivement 3210, 3220, 3230, 3240 et 3250 pour les manchons 321 à 325 et 3310, 3320, 3330, 3340 et 3350 pour les manchons 331 à 335.

Comme on peut le voir sur la figure 9, chaque tube 40 est percé d'une pluralité d'orifices 41 d'injection d'air.

Comme cela apparait mieux sur les figures 8 et 9, le fond 31 du boitier 3 est percé d'une série d'orifices de refroidissement 37, disposés avantageusement en ligne et de préférence sur toute sa largeur L.

« Toute la largeur L » signifie du point où le fond 31 rejoint la paroi latérale 32 (ou plus précisément l'un des manchons 321 à 325) au point où le fond 31 rejoint la paroi 33 (ou plus précisément l'un des manchons 331 à 335).

Les tubes 40 sont disposés de façon que leurs orifices de refroidissement 41 soient alignés avec les orifices 37.

De façon avantageuse, chaque manchon 321 à 325 et 331 à 335 est également muni d'orifices de refroidissement 38 alignés avec les orifices de refroidissement 37 du boîtier. Ces orifices 38 sont présents sur toute la longueur du manchon à l'exception de son embouchure au niveau de laquelle le tube 40 est emmanché et brasé. Les orifices 38 sont ménagés le long des fonds 3210 à 3250 et 3310 à 3350 des manchons.

Sur le fond 31 du boîtier 3, il y a autant de lignes d'orifices de refroidissement 37 que de rampes 4.

Par ailleurs, chaque tube 40 est cintré, c'est-à-dire qu'il présente une forme en arc de cercle dont le rayon est légèrement supérieur à celui de la portion du carter en face de laquelle il est destiné à être positionné. De préférence également, le fond 31 du boitier est incurvé de part et d'autre de l'axe médian X-X', de sorte que sa concavité est orientée vers la surface du carter 1, de façon à épouser sensiblement la forme du carter 1 en face duquel le boîtier est destiné à être positionné.

En d'autres termes, et comme on le voit sur la figure 7, les côtés du fond 31 situés à droite et à gauche de l'axe médian X-X' sont plus bas que le centre de fond qui s'étend le long dudit axe X-X'.

De même, avantageusement, les manchons 321 à 325 et 331 à 335 sont cintrés de sorte que leur partie concave, qui correspond à leurs fonds (lignes de fond) respectifs 3210 à 3250 et 3310 à 3350 soit orientée vers la surface extérieure 13 du carter, de façon à épouser sensiblement la forme du carter en face duquel ils sont positionnés.

Cette disposition particulière, combinée au fait que le fond de chaque manchon 321 à 325 et 331 à 335 est à la même hauteur que le fond 31 du boitier 3 permet d'avoir un refroidissement homogène du carter 1, puisque les différents orifices d'injection d'air 37 du fond 31 et 38 des manchons se trouvent à une distance (entrefer E5) constante ou quasiment constante de la surface extérieure du carter 1.

De préférence également, cet entrefer E5 est calculé pour être égal ou sensiblement égal à l'entrefer E6 existant entre un tube 40 (ou ses orifices de refroidissement 41) et la surface extérieure 13 du carter 1. L'écart entre les deux entrefers réside dans l'épaisseur du manchon.

De préférence, les entrefers E5 et E6 sont compris entre 2mm et 4,5 mm, de préférence égaux à 3,5 mm.

Par ailleurs, la zone Z3 entre le dernier orifice de refroidissement 38 et le premier orifice 41, dans laquelle il n'y a pas d'orifices de refroidissement est d'une longueur moindre que la zone Z1 des dispositifs de refroidissement de l'état de la technique (voir figures 4 et 9). Une plus grande partie du carter 1 est ainsi refroidie.

Enfin, de façon avantageuse, et comme cela apparait mieux sur les figures 5 et 6, chaque manchon 321 à 325 et 331 à 335 présente une zone de jonction avec la paroi latérale 32, 33 du boitier 3. Cette zone de jonction s'évase depuis le manchon en direction desdites parois latérales 32, 33 sauf au niveau du fond du manchon. Les zones de jonction des manchons 321 à 325 et 331 à 335 sont référencées respectivement 3211, 3221, 3231, 3241, 3251 et 3311, 3321, 3331, 3341 et 3351 (la référence 3311 n'étant visible que sur la figure 8).

En d'autres termes, le rayon R2 de la zone de jonction évasée au niveau où elle se raccorde à la paroi latérale 32, 33 est supérieur au rayon R1 de l'embouchure du manchon à l'endroit où elle se raccorde à ladite zone de jonction (voir figure 6).

Ceci permet de réduire fortement les pertes de charge entre le boitier et les tubes des différentes rampes, puisque les dimensions de la zone de jonction se réduisent progressivement.

Outre les différents avantages précités de l'invention, on notera que le procédé de fabrication du dispositif de refroidissement est simplifié puisqu'il y a moins d'opérations de brasage qu'avec le dispositif de l'état de la technique.

Par ailleurs, le dispositif est plus robuste, ce qui diminue également la durée et la fréquence des opérations de réparation et de maintenance.

Enfin, le carter étant mieux refroidi, sa durée de vie est augmentée.

## Revendications

1. Dispositif (2) de refroidissement par jets d'air du carter (1) d'une turbine, de préférence basse pression, d'une turbomachine, comprenant un boitier d'alimentation en air sous pression (3) et au moins une rampe de refroidissement (4) comprenant deux tubes de refroidissement (40) disposés de part et d'autre dudit boitier (3), ledit boitier (3) comprenant un fond (31), deux parois latérales longitudinales (32, 33), deux parois d'extrémité amont (35) et aval (34) et une paroi supérieure (36), et ledit fond (31) du boitier étant percé d'orifices d'injection d'air (37) disposés de façon à déboucher vers le carter autour duquel ledit dispositif de refroidissement (2) est destiné à être disposé, chaque tube de refroidissement (40) étant incurvé, disposé autour d'une partie du carter et à distance de celui-ci et étant muni d'orifices d'injection d'air (41) débouchant vers le carter, chacune desdites parois latérales (32, 33) se prolonge vers l'extérieur par au moins un manchon tubulaire (321, 322, 323, 324, 325, 331, 332, 333, 334, 335) monobloc avec ladite paroi latérale (32 33 chaque manchon est configuré et dimensionné pour que l'un des tubes de refroidissement (40) puisse y être raccordé, **caractérisé en ce que** chaque manchon est disposé sur ladite paroi latérale (32, 33) de façon que son fond (3210, 3220, 3230, 3240, 3250, 3310, 3320, 3330, 3340, 3350) soit au même niveau que ledit fond (31) du boitier à l'endroit de leur jonction.

2. Dispositif (2) selon la revendication 1, **caractérisé en ce que** le fond (3210, 3220, 3230, 3240, 3250, 3310, 3320, 3330, 3340, 3350) du manchon est percé, sur au moins une partie de sa longueur, d'orifices d'injection d'air (38) disposés de façon à déboucher vers le carter autour duquel ledit dispositif (2) est destiné à être disposé.

3. Dispositif (2) selon la revendication 2, **caractérisé en ce que** les orifices d'injection d'air (37) ménagés dans le fond (31) du boîtier (3) sont alignés avec les orifices d'injection d'air (38) ménagés dans les manchons (321, 322, 323, 324, 325, 331, 332, 333, 334, 335) et avec les orifices d'injection d'air (41) ménagés dans les tubes de refroidissement (40).

4. Dispositif (2) selon l'une quelconque des revendications précédentes, **caractérisé en ce que** le fond (31) du boitier (3) et les manchons (321, 322, 323, 324, 325, 331, 332, 333, 334, 335) sont incurvés de part et d'autre d'un axe longitudinal médian (X-X') du boitier, de façon à épouser la forme du contour du carter autour duquel ledit dispositif de refroidissement est destiné à être disposé et de façon qu'il existe un entrefer constant ou sensiblement constant (E5) entre la surface extérieure (13) dudit carter (1) d'une part et le fond (31) du boîtier (3) et les fonds (3210, 3220, 3230, 3240, 3250, 3310, 3320, 3330, 3340, 3350) desdits manchons d'autre part.

5. Dispositif (2) selon l'une des revendications précédentes, **caractérisé en ce que** chaque manchon (321, 322, 323, 324, 325, 331, 332, 333, 334, 335) présente une zone de jonction (3211, 3221, 3231, 3241, 3251, 3311, 3321, 3331, 3341, 3351) avec la paroi latérale (32, 33) du boitier (3) et **en ce que** cette zone de jonction est évasée du manchon vers la paroi latérale (32, 33) du boitier et sur la portion de sa circonférence autre que celle du fond (3210, 3220, 3230, 3240, 3250, 3310, 3320, 3330, 3340, 3350) du manchon.

6. Dispositif (2) selon l'une des revendications précédentes, **caractérisé en ce que** ladite paroi supérieure (36) du boitier (3) est constituée d'un couvercle rapporté et fixé aux parois latérales (32, 33) et d'extrémité (34, 35) dudit boitier.

7. Dispositif (2) selon la revendication 6, **caractérisé en ce que** le couvercle (36) est fixé aux parois latérales (32, 33) et d'extrémité (34, 35) dudit boitier par soudure ou brasage.

8. Dispositif (2) selon l'une des revendications précédentes, **caractérisé en ce que** les tubes (40) des rampes de refroidissement (4) sont introduits dans l'extrémité libre des manchons (321, 322, 323, 324, 325, 331, 332, 333, 334, 335) et raccordés à celle-ci par brasage.

9. Turbomachine comprenant une turbine, notamment une turbine basse pression, entourée d'un carter (1), **caractérisée en ce qu'**elle comprend un dispositif de refroidissement par jets d'air (2) dudit carter, selon l'une quelconque des revendications précédentes.

## Patentansprüche

1. Vorrichtung (2) zur Kühlung des Mantels (1) einer Turbine, vorzugsweise einer Niederdruckturbine, einer Turbomaschine mit Luftstrahlen, die ein Druckluft-Versorgungsgehäuse (3) und mindestens eine Kühlrampe (4) umfasst, die zwei Kühlrohre (40) umfasst, die auf beiden Seiten des Gehäuses (3) angeordnet sind, wobei das Gehäuse (3) einen Boden (31), zwei seitliche Längswände (32, 33), zwei stromaufwärtige (35) und stromabwärtige Endwände (34) und eine obere Wand (36) umfasst, und der Boden (31) des Gehäuses von Lufteinblasöffnungen (37) durchbohrt ist, die derart angeordnet sind, dass sie in Richtung des Mantels münden, um das die Kühlvorrichtung (2) bestimmt ist, angeordnet zu sein, wobei jedes Kühlrohr (40) gekrümmt, um einen Teil des Mantels und im Abstand davon angeordnet ist und mit Lufteinblasöffnungen (41) versehen ist, die in Richtung des Mantels münden, wobei jede von den Seitenwänden (32, 33) durch mindestens eine rohrförmige Muffe (321, 322, 323, 324, 325, 331, 332, 333, 334, 335), die einstückig mit der Seitenwand (32, 33) ist, nach außen verlängert ist, wobei jede Muffe derart ausgestaltet und bemessen ist, dass eines von den Kühlrohren (40) daran angeschlossen werden kann, **dadurch gekennzeichnet, dass** jede Muffe derart an der Seitenwand (32, 33) angeordnet ist, dass ihr Boden (3120, 3220, 3230, 3240, 3250, 3310, 3320, 3330, 3340, 3350) sich auf der gleichen Höhe befindet wie der Boden (31) des Gehäuses an der Stelle ihrer Verbindung.

2. Vorrichtung (2) nach Anspruch 1, **dadurch gekennzeichnet, dass** der Boden (3210, 3220, 3230, 3240, 3250, 3310, 3320, 3330, 3340, 3350) der Muffe auf mindestens einem Teil seiner Länge von Lufteinblasöffnungen (38) durchbohrt ist, die derart angeordnet sind, dass sie in Richtung des Mantels münden, um das die Vorrichtung (2) bestimmt ist, angeordnet zu sein.

3. Vorrichtung (2) nach Anspruch 2, **dadurch gekennzeichnet, dass** die Lufteinblasöffnungen (37), die im Boden (31) des Gehäuses (3) vorgesehen sind, mit den Lufteinblasöffnungen (38), die in den Muffen (321, 322, 323, 324, 325, 331, 332, 333, 334, 335) vorgesehen sind, und mit den Lufteinblasöffnungen (41) ausgerichtet sind, die in den Kühlrohren (40) vorgesehen sind.

4. Vorrichtung (2) nach einem der vorhergehenden Ansprüche, **dadurch gekennzeichnet, dass** der Boden (31) des Gehäuses (3) und die Muffen (321, 322, 323, 324, 325, 331, 332, 333, 334, 335) derart auf beiden Seiten einer Längsmittelachse (X-X') des Gehäuses gekrümmt sind, dass sie an die Form der Kontur des Mantels angepasst sind, um die die Kühlvorrichtung bestimmt ist, angeordnet zu sein, und derart, dass ein konstanter oder im Wesentlichen konstanter Spalt (E5) zwischen der Außenfläche (13) des Mantels (1) einerseits und dem Boden (31) des Gehäuses (3) und den Böden (3210, 3220, 3230, 3240, 3250, 3310, 3320, 3330, 3340, 3350) der Muffen andererseits vorhanden ist.

5. Vorrichtung (2) nach einem der vorhergehenden Ansprüche, **dadurch gekennzeichnet, dass** die Muffe (321, 322, 323, 324, 325, 331, 332, 333, 334, 335) einen Verbindungsbereich (3211, 3221, 3231, 3241, 3251, 3311, 3321, 3331, 3341, 3351) mit der Seitenwand (32, 33) des Gehäuses (3) aufweist, und dadurch, dass dieser Verbindungsbereich von der Muffe in Richtung der Seitenwand (32, 33) des Gehäuses und auf dem Abschnitt seines Umfangs, der sich von demjenigen des Bodens (3210, 3220, 3230, 3240, 3250, 3310, 3320, 3330, 3340, 3350) der Muffe unterscheidet, konisch erweitert ist.

6. Vorrichtung (2) nach einem der vorhergehenden Ansprüche, **dadurch gekennzeichnet, dass** die obere Wand (36) des Gehäuses (3) aus einem Deckel besteht, der an die Seiten- (32, 33) und Endwände (34, 35) des Gehäuses angesetzt und daran befestigt ist.

7. Vorrichtung (2) nach Anspruch 6, **dadurch gekennzeichnet, dass** der Deckel (36) durch Schweißen oder Löten an den Seiten- (32, 33) und Endwänden (34, 35) des Gehäuses befestigt ist.

8. Vorrichtung (2) nach einem der vorhergehenden Ansprüche, **dadurch gekennzeichnet, dass** die Rohre (40) der Kühlrampen (4) in das freie Ende der Muffen (321, 322, 323, 324, 325, 331, 332, 333, 334, 335) eingeführt sind und durch Löten daran angeschlossen sind.

9. Turbomaschine, die eine Turbine, insbesondere eine Niederdruckturbine, umfasst, die von einem Mantel (1) umgeben ist, **dadurch gekennzeichnet, dass** sie eine Vorrichtung (2) zur Kühlung des Mantels mit Luftstrahlen nach einem der vorhergehenden Ansprüche umfasst.

## Claims

1. A device (2) for cooling a turbine casing (1) by air jets, preferably a low-pressure turbine casing of a turbomachine, comprising a pressurized air supply housing (3) and at least one cooling line (4) comprising two cooling pipes (40) arranged on each side of said housing (3), said housing (3) comprising a bottom (31), two longitudinal side walls (32, 33), two upstream (35) and downstream (34) end walls and an upper wall (36), and said bottom (31) of the housing being pierced by air injection orifices (37) arranged so as to open toward the casing around which said cooling device (2) is intended to be arranged, each cooling pipe (40) being curved, arranged around a part of the casing and at a distance therefrom and being provided with air injection orifices (41) opening toward the casing, each of said side walls (32, 33) extends outward via at least one tubular sleeve (321, 322, 323, 324, 325, 331, 332, 333, 334, 335) integral with said side wall (32, 33), each sleeve is configured and dimensioned so that one of the cooling pipes (40) may be connected thereto, **characterized in that** each sleeve is arranged on said side wall (32, 33) so that its bottom (3210, 3220, 3230, 3240, 3250, 3310, 3320, 3330, 3340, 3350) is at the same level as said bottom (31) of the housing at the place where they join.

2. The device (2) according to claim 1, **characterized in that** the bottom (3210, 3220, 3230, 3240, 3250, 3310, 3320, 3330, 3340, 3350) of the sleeve is pierced, over at least one part of its length, by air injection orifices (38) arranged so as to open toward the casing around which said device (2) is intended to be arranged.

3. The device (2) according to claim 2, **characterized in that** the air injection orifices (37) made in the bottom (31) of the housing (3) are aligned with the air injection orifices (38) made in the sleeves (321, 322, 323, 324, 325, 331, 332, 333, 334, 335) and with the air injection orifices (41) made in the cooling pipes (40).

4. The device (2) according to any one of the preceding claims, **characterized in that** the bottom (31) of the housing (3) and the sleeves (321, 322, 323, 324, 325, 331, 332, 333, 334, 335) are curved on each side of a median longitudinal axis (X-X') of the housing, so as to follow the shape of the casing's contour around which said cooling device is intended to be arranged and so that there is a constant or substantially constant air gap (E5) between the outer surface (13) of said casing (1) on the one hand and the bottom (31) of the housing (3) and the bottoms (3210, 3220, 3230, 3240, 3250, 3310, 3320, 3330, 3340, 3350) of said sleeves on the other hand.

5. The device (2) according to one of the preceding claims, **characterized in that** each sleeve (321, 322, 323, 324, 325, 331, 332, 333, 334, 335) has a junction area (3211, 3221, 3231, 3241, 3251, 3311, 3321, 3331, 3341, 3351) with the side wall (32, 33) of the housing (3) and **in that** this junction area is flared from the sleeve toward the side wall (32, 33) of the housing and over the portion of its circumference other than that of the bottom (3210, 3220, 3230, 3240, 3250, 3310, 3320, 3330, 3340, 3350) of the sleeve.

6. The device (2) according to one of the preceding claims, **characterized in that** said upper wall (36) of the housing (3) consists of a cover added on and attached to the side (32, 33) and end (34, 35) walls of said housing.

7. The device (2) according to claim 6, **characterized in that** the cover (36) is attached to the side (32, 33) and end (34, 35) walls of said housing by welding or brazing.

8. The device (2) according to one of the preceding claims, **characterized in that** the pipes (40) of the cooling lines (4) are introduced into the free end of the sleeves (321, 322, 323, 324, 325, 331, 332, 333, 334, 335) and connected thereto by brazing.

9. A turbomachine comprising a turbine, notably a low-pressure turbine, surrounded by a casing (1), **characterized in that** it comprises a device for cooling said casing by air jets (2) as claimed in any one of the preceding claims.
